# EUROPEAN PATENT APPLICATION

(11) **EP 1 719 674 A2**
(43) Date of publication of application: **08.11.2006**
(21) Application number: 06112823.7
(22) Date of filing: 20.04.2006
(51) Int. Cl.: B60S 3/04

(54) **Fluid delivery device for vehicle washing systems**

(30) Priority: 05.05.2005 IT SV20050019
(71) Applicant: SIAL S.P.A., 12084 Mondovi (IT)
(72) Inventor: Cavarero, Dario, 12084, Mondovì (CN) (IT)
(74) Representative: Karaghiosoff, Giorgio Alessandro

(57) **Abstract**

The invention relates to a device (1) for variable pressure delivery of watery fluids for vehicle washing systems, the device (1) having an inlet (401), at least one first outlet (801) and at least one second outlet (171), characterized in that it further comprises automatic shut-off means (111, 121, 141, 131, 601) for deviating a fluid flowing into the device to either the first (801) or the second outlet (171) depending on its pressure.

The invention further relates to a vehicle washing system, or the like, characterized in that it comprises a fluid delivery device (1) of the type described above, and means for supplying water to such delivery device, which means include at least one delivery pump (2).

## Description

The invention relates to a fluid delivery device for vehicle washing systems and to a washing system comprising a device of such type.

Prior art systems include a pump for delivering water under pressure from the water distribution system or reservoirs, e.g. hot water reservoirs such as boilers or the like, through a delivery device. This device may be of any type, and is typically a particular type of delivery wand comprising one or more nozzles that may possibly be integrated in a brush member, or the like, or connected thereto. Water delivery pressure is maintained at such a level as to assure effective rinsing of the vehicle and the nozzle/s generally have a small section, although compatible with such pressure.

Simpler systems include an additional circuit for delivering a detergent to be used for soaping the vehicle to be washed. To this end metering pumps are provided, which are connected to detergent reservoirs and to a second delivery device. As the detergent delivery pressure is lower by even one order of magnitude than water delivery pressure, the detergent delivery device has different characteristics with respect to the pressurized water delivery device, and particularly has a channel whose section is larger than that of the nozzle/s of the water delivery device. Therefore, the user has to handle one of two separate wands, depending on whether the vehicle has to be soaped or rinsed, which involves a poor handability of the system. Furthermore, two fluid delivery devices require two maintainance operations by the user of the system, with a consequent cost increase.

Advanced systems have a common circuit for supplying water and/or detergent. Particularly, devices are provided for limiting water flow and/or delivery pressure, so that the detergent may be introduced in the delivery circuit of the water delivery pump and be mixed therewith. Therefore, the system has one outlet only, to alternately provide water under pressure and a mixture of water and detergent at a lower pressure, similar to that of the above systems having separate supply circuits. The outlet is usually connected to two separate fluid delivery devices, identical to those of the above systems, by means of valves, which are operated by a controller or by the operator. Thus, the water and/or water-detergent mixture is accordingly conveyed to the first or the second fluid delivery device. Thereore in this case, in addition to two separate fluid delivery devices, valves are required, which are operated manually or by means of appropriate control systems to convey the fluid to the proper delvery device, which increases system's complexity and costs.

The invention has the object of providing a system which at least partly obviates these drawbacks, and particularly can delivery both rinse water and detergent using a single fluid delivery device, by simple and inexpensive arrangements. This not only reduces the costs and complexity of the system, but further affords a higher handability thereof, especially for token-operated systems, in which users must perform operations in short times, to reduce costs.

The invention fulfils the above object by providing a fluid delivery device having one inlet and at least two outlets and in which automatic shut-off means are provided to deviate a fluid flowing into the device to either the first or the second outlet, depending on pressure and/or flow rate. Thus, thanks to the different pressures and/or flows of delivery of rinse water and detergent, rinse water may be conveyed to an outlet adapted to allow the supply of fluids having pressures above a certain threshold, and detergent may be conveyed to a second outlet adapted to allow the supply of fuids having pressures below such threshold. The two outlets are on the same device and actually comprise one or more nozzles having a small section for delivering water under pressure, typically at a pressure of 100 bar, and an outlet channel having a larger section for delivering detergent, typically at a pressure of 810 bar. This deviation is achieved automatically and requires no intervention by the operator and no power-operated control by a controller, the deviation mechanism being operated by the fluid flowing into device itself.

Advantageously, the automatic shut-off means comprise a chamber communicating with the inlet and the first and second outlets, a central hollow body being housed in the chamber removably between a first stable open position in which the incoming fluid may reach the second outlet and an instable closed position in which the fluid is wholly conveyed to the first outlet, through the central body. The central body is preferably interposed between the inlet and the first outlet and is stably stressed toward the inlet by elastic means. Seal means are further provided between the inlet and the second outlet. The incoming fluid exerts a pressure on the body against the action of the elastic means toward the first outlet and against the seal devices, thereby forming a sealed circuit between the inlet and the first outlet for pressures above the threshold.

According to one embodiment, the central body includes a tube with its ends facing the inlet and the first outlet respectively. The end facing the first outlet is streamlined whereas the first outlet has a hole within which the tapered end of the tube is fitted when the body is pushed by the pressure exerted by the incoming fluid.

Advantageously, the chamber is divided into a first and a second adjacent compartments and the tube end facing the inlet has a widened head upon which pressure is at least partly exerted by the incoming fluid. The tube head is free to move in the first compartment whereas the chamber has a surface on which the tube head abuts, thereby defining a separating wall for the two compartments. O-rings are mounted on the surface so that, when the head is pushed against the surface, the first compartment is sealed from the second compartment. Since the second outlet is in communication with the second compartment of the chamber, the low pressure incoming fluid reaches the second outlet whenever the pressure and/or the flow are below the threshold above which a seal is generated between the first compartment and the first outlet.

The fluid delivery device of the invention particularly finds application in vehicle washing systems having a single supply circuit for variable pressure watery fluids, such as the pressurized rinse water, and the low-pressure water-and-detergent mixture. In this case, appropriate sizing of the device allows to deliver fluids having different compositions through different outlets, particularly adapted for such types of fluids and being part of the same fluid delivery device.

According to another aspect, the invention relates to a vehicle washing system, or the like. The system comprises a fluid delivery device of the invention and means, including at least one delivery pump, to supply water to the fluid delivery device. Water flow and/or delivery pressure limiting means are further provided, which are designed to reduce pressure when supplying water with a detergent and/or a foaming agent in it.

In accordance with an embodiment, the delivery pump is a piston pump, or the like, and is used as a flow limiting device, thanks to means for varying/limiting the operating speed thereof. Alternatively, different flow limiting devices may be provided, one example of which will be described hereinafter. In addition, the system comprises a pipe for supplying a detergent agent, which is connected upstream or downstream from the delivery pump, whereas a separate detergent delivery pump is provided in the supply pipe, or other similar means for actively supplying said agent. The detergent is supplied with the delivery pump operating at reduced capacity, the detergent delivery means being sized in such a manner that the detergent delivery pressure is higher than the water delivery pressure.

In accordance with an additional feature, the system additionally comprises a pipe for supplying a foaming agent, typically compressed air, which is connected downstream from the delivery pump, a shut-off valve and non-return valves being provided both in the foaming agent supplying pipe and between said pipe and the delivery pump. The foaming agent is supplied with the delivery pump operating at reduced capacity, the foaming agent delivery means being sized in such a manner that the foaming agent delivery pressure, typically 8 bar, is higher than the water delivery pressure.

Water with no foaming agent and/or detergent in it is delivered when the delivery pump operates at full capacity to assure effective rinsing, typically at a pressure of 100 bar.

The fluid delivery device has such a size that the foaming agent and/or the detergent are delivered from the second outlet, whereas the rinse water is delivered from the first outlet.

According to a variant, there are provided a bypass valve to limit the maximum pressure in the water supply pipe and means for enabling/disabling the supply to the delivery device, such as a poppet valve, designed to be operated by a trigger in the handle of the wand which supports the delivery device.

According to a particularly advantageous embodiment, when the delivery pump operates at reduced capacity, the air supply means are operated simultaneously. By this arrangement, any pressure increase in the supply pipe, caused by disabling the supply to the delivery device may be discharged on the delivery device in an attenuated manner once the supply is enabled again. The air contained in the circuit is compressible and forms a bearing adapted to absorb any sudden pressure jumps which might damage the device and further cause abnormal operation thereof.

Further features and improvements will form the subject of the dependent claims.

The features of the invention and the advantages derived therefrom will be more apparent from the following detailed description of the annexed drawings, in which:
Fig. 1 is a longitudinal section through a delivery device according to the invention.
Fig. 2 is a schematic view of an embodiment of the system of the invention.
Fig. 3 is a schematic view like that of Figure 2, in which the detergent is supplied upstream from the pump, an alternative flow control device being further shown in Figure 3 by means of broken lines.

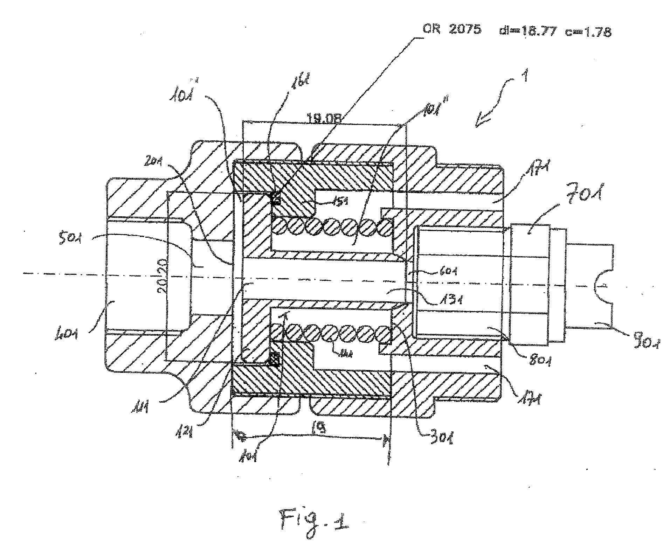

Referring to Figure 1, the delivery device 1 comprises a central cylindrical chamber 101 which is delimited by two transverse walls, a proximal wall 201 at the inlet 401 and a distal wall 301 facing the outlet 801 of the device. An inlet union 401, which may be connected to a supply pipe (not shown) by complementary mutual fastening means, communicates through a channel 501 with the central chamber 101 through the wall 201. The channel 501 is choked with respect to the inlet union 401 to increase the pressure of fluid flowing into the chamber 101.

The chamber 101 has an outlet orifice 601 (also referred to herein as high-pressure outlet or first outlet) on the distal wall 301, which is coaxial with the channel 501, and puts the chamber 101 in communication with a nozzle holder 701 through an outlet union 801. The nozzle holder 701 and the outlet union 801 are connected by complementary mutual fastening means, more particularly one thread. The nozzle holder 701 has a cap 901 with one or more holes formed therein for the outflow of fluid under pressure.

A tube 111 is disposed in the chamber 101. Such tube 111, which is coaxial both with the inlet channel 501 and with the pressure outlet orifice 601, has a widened head 121 at the end facing the inlet, which is acted upon, at least partly, by the pressure of the incoming fluid, whereas the other end 131 is streamlined to fit into the outlet orifice 601 when the tube is pushed by the pressure exerted by the fluid. One spring 141, disposed between the head of the tube 121 and the distal wall 301 of the chamber 101 stably presses the head of the tube 121 toward the proximal wall 201 of the chamber 101 against the pressure exerted by the fluid. The inlet channel 501 faces the chamber 101 at the widened head 121 of the tube 111 and its section is larger than that of the tube 111 so that the fluid flowing from the inlet at least partly hits the head of the tube 111.

The chamber 101 has a side surface 151 against which the head of the tube 121 abuts. When the head of the tube 121 abuts against the side surface 151, due to the pressure exerted by the incoming fluid, the head 121 and the surface 151 define a wall within the chamber, to divide the latter into two adjacent compartments 101' and 101''. Since O-rings 161 are fitted on the surface 151, once the head is pushed against the surface 151, the two compartments 101', 101'' are sealed from each other and the incoming fluid is wholly conveyed to the pressure outlet 601, through the tube 111.

The device has a second outlet 171 for the outflow of non-pressurized fluid (also referred to herein as low-pressure outlet or second outlet). This outlet has one or more channels 171 surrounding the outlet union 801 and is laterally connected to the chamber 101, particularly to the compartment 101" of the chamber 101, situated between the abutment surface 151 and the distal wall 301 so that, when the head of the tube 121 abuts against the surface 151, the low-pressure outlet 171 is sealed from the inlet 401.

The various parts of the device as a whole, and particularly of the channel 501, the orifice and the head of the tube 121 and the spring 141, are designed in such a manner that a seal is formed between the inlet 401 and the pressure outlet 601, whereby fluid is allowed to flow through this outlet 601, e.g. at pressures above 100 bar.

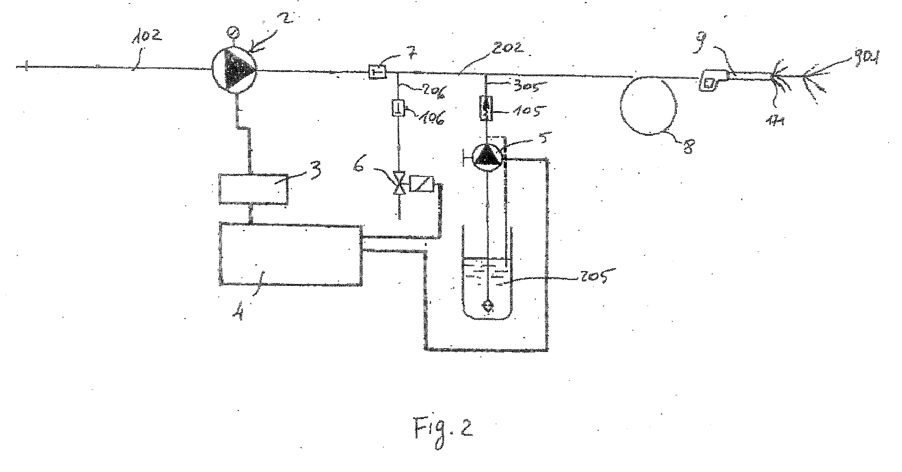

Referring to Figure 2, the vehicle washing system comprises a pump 2, particularly a piston pump, whose suction pipe 102 may be connected to the supply pipe of the water distribution system and/or the outlet pipe of water generators and/or reservoirs, e.g. hot water generators and/or reservoirs, such as boilers or the like (not shown) .

The delivery pipe 202 of the pump 2 is connected by means of a hose 8 to a fluid delivery device according to the invention, which may be held, for instance, inside a delivery wand 9.

Downstream from the pump 2, the delivery pipe 202 is connected to a cleaning agent supply pipe 305, particularly for supplying a detergent for vehicles. The supply pipe 305 is the delivery pipe of a detergent supply pump 5, which draws the detergent from a container 205. A nonreturn valve is provided in the supply pipe 305 downstream from the supply pump 5, and automatically closes in the flow direction from the delivery pipe of the delivery pipe 2 to the detergent container 205.

In addition to the detergent supply pipe 305, a further pipe 206 may be used for drainage at the end of the cycle or for supplying compressed air to facilitate foaming. The branch of the delivery pipe 202 is connected through a shut-off valve 6 and a nonreturn valve 106 to compressed air generators, not shown. In this case, to prevent compressed air from entering the circuit in a direction opposite the water supply direction to the pump 2 in the section of the delivery pipe 202 of the pump 2, a further nonreturn valve 7 is provided between the latter and the compressed air supply pipe, which may be associated to a bypass valve (not shown) for limiting the maximum pressure of water in the delivery pipe 202, e.g. to 100 bar.

The delivery pump 2, the detergent supply pump 5, and the compressed air shut-off valve 6 are connected to a controller 4, in which the different washing cycles are programmed.

The controller 4 operates the delivery pump 2 and controls an rpm governor 3 thereof, which allows to adjust the flow and pressure generated thereby in the delivery pipe 202. There are basically two washing cycles: a first soap cycle and a second rinse cycle.

During the soap cycle, the controller 4 sets the rpm governor 3 of the pump 2 to a lower value, to limit water flow and pressure in the delivery pipe 202. Water pressure in the delivery pipe 202 is reduced to such an extent as to be slightly lower than the delivery pressure in the detergent supply pipe 305 and the compressed air supply pipe 206. By this arrangement, a predetermined amount of detergent and air is mixed with water downstream from the delivery pump 2, thereby forming a foam for vehicle soaping. This foam is maintained at a reduced pressure level, such as 810 bar, and is delivered from the low-pressure outlet 171 of the fluid delivery device 1.

At the end of the soap cycle, the rinse cycle begins. By controlling the rpm governor 3 of the pump 2, the controller 4 increases water delivery flow and pressure. Typical values for flow and pressure of rinse water are about 11 liters per minute and about 100 bar. The detergent and compressed air supply pipes 305 and 206 are automatically closed by water pressure. During rinsing, the pump 2 is operated at full capacity and provides a considerable amount of water at a considerable pressure through the outlet nozzle 901, for fast and effective detergent removal.

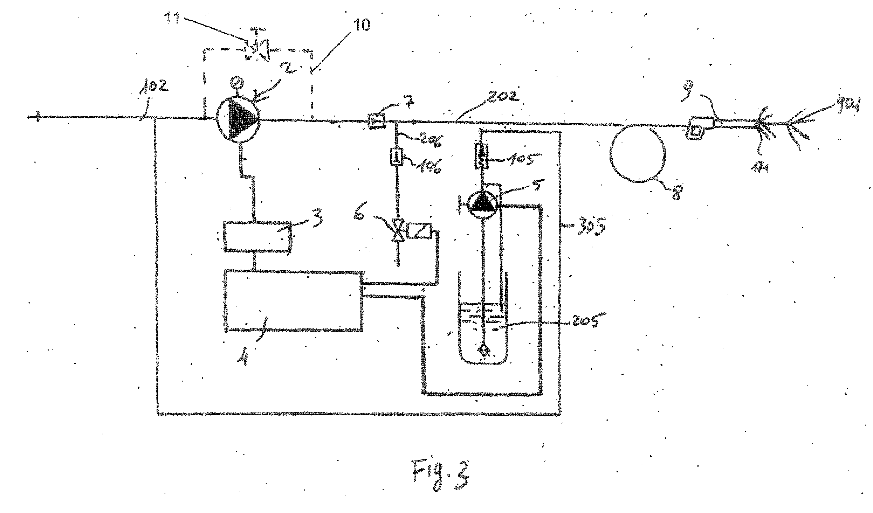

Particularly referring to Figure 3, an alternative flow regulator is shown by means of broken lines, which may also be provided in a system according to the variant of Figure 2. In this case, flow rate is not controlled by the rpm governor of the pump, but by means of a branch for deviating a portion of the fluid supplied to the pump. In this embodiment, the branch is a bypass which conveys a portion of the flow from the pump delivery to the suction side thereof. The branch or bypass 10 have a valve for shut-off and/or adjustment of the fluid flow in said branch or bypass, which valve is designated by numeral 11 and is of the remote controlled type, i.e. a solenoid valve. It will be understood that the control that adjusted the number of turns of the pump motor in the previous example, can now cause the valve 11 to be opened and/or closed. Other flow regulation devices may of course be envisaged, among those currently known to those skilled in the art.

Obviously, the invention is not limited to the embodiments described herein but may be greatly varied. For example, the delivery wand may have various designs, comprising more pressure outlet nozzles, for possible connection to a brush. All this without departure from the guiding principle disclosed above and claimed below.

## Claims

1. A device (1) for variable pressure delivery of watery fluids for vehicle washing systems, the device (1) having an inlet (401), at least one first outlet (801) and at least one second outlet (171), **characterized in that** it further comprises automatic shut-off means (111, 121, 141, 131, 601) for deviating a fluid flowing into the device to either the first (801) or the second outlet (171) depending on its pressure.

2. A device as claimed in claim 1, **characterized in that** said first outlet (801) is adapted to allow the outflow of fluids having pressures above a certain threshold and said second outlet (171) is adapted to allow the outflow of fluids having pressures below said threshold.

3. A device as claimed in claim 1 or 2, **characterized in that** the automatic shut-off means (111, 121, 141, 131, 601) comprise a chamber (101) communicating with the inlet (401) and the first (801) and second (171) outlets, a central hollow body (111) being housed in said chamber (101) removably between a first stable open position in which the incoming fluid may reach the second outlet (171) and an instable closed position in which the fluid is wholly conveyed to the first outlet (801), through the central body (111) .

4. A device as claimed in claim 3, **characterized in that** the central body (111) is interposed between the inlet and the first outlet (801) and is stably stressed toward the inlet (401, 501) by elastic means (141), seal means (161) being provided between the inlet (401, 501) and the second outlet (171), the incoming fluid exerting a pressure on said body (111) against the action of said elastic means (141) toward the first outlet (801) and against the seal devices (161), thereby forming a sealed circuit between the inlet (401) and the first outlet (801) for pressures above the threshold.

5. A device as claimed in claim 3 or 4, **characterized in that** the central body comprises a tube (111) with ends facing the inlet (121) and the first outlet (131) respectively, the end facing the first outlet (131) being streamlined, the first outlet (801) having a hole (601) within which the streamlined end (131) off the tube (111) is fitted when the body is pushed by the pressure exerted by the incoming fluid.

6. A device as claimed in claim 5, **characterized in that** the tube end facing the inlet (401, 501), has a widened head (121), which is acted upon, at least partly, by the pressure of the incoming fluid.

7. A device as claimed in claim 6, **characterized in that** the chamber (101) is divided into a first and a second adjacent compartments (101', 101"), the head (121) of the tube (111) being free to move within the first compartment (101').

8. A device as claimed in claim 7, **characterized in that** the chamber (101) has a surface (151) on which the head (121) of the tube (111) abuts, thereby defining a separating wall for the two compartments (101', 101").

9. A device as claimed in claim 8, **characterized in that** o-rings (161) are mounted on the surface (151) so that, when the head (121) is pushed against said surface (151), the first compartment (101') is sealed from the second compartment (101'').

10. A device as claimed in one or more of the preceding claims 7 to 9, **characterized in that** the second outlet (171) communicates with the second compartment (101") of the chamber (101).

11. A device as claimed in one or more of the preceding claims 7 to 10, **characterized in that** the elastic means include a spring (141), located in the second compartment (101"), the spring (141) exerting a pressure on the side of the head of the tube (121) that faces the inside of the chamber (101).

12. A device as claimed in one or more of the preceding claims, **characterized in that** the inlet has an inlet union (401) which may be connected to a supply tube by complementary mutual fastening means, and a channel (501) which faces the chamber (101) at the widened head (121) of the tube (111).

13. A device as claimed in claim 12, **characterized in that** the channel (501) is choked with respect to the inlet union (401) to increase the pressure of fluid flowing into the chamber (101).

14. A device as claimed in claim 13, **characterized in that** the section of the channel (501) is larger than that of the tube (111) so that the fluid flowing from the inlet at least partly hits the tube head (121).

15. A device as claimed in one or more of the preceding claims, **characterized in that** the first outlet has an outlet union (801) which may be connected to a nozzle holder (701).

16. A device as claimed in claim 15, **characterized in that** the nozzle holder (701) and the outlet union (801) may be connected by complementary mutual fastening means, such as a thread or the like.

17. A device as claimed in claim 15 or 16, **characterized in that** the nozzle holder (701) has a cap (901) with one or more holes formed therein for the outflow of fluid under pressure.

18. A device as claimed in one or more of the preceding claims, **characterized in that** the second outlet comprises one or more outlet channels (171) surrounding the outlet union (801) for the fluid under pressure.

19. A device as claimed in one or more of the preceding claims, **characterized in that** the section of the channel (501) and/or the diameter of the tube (111) and/or the size of the tube head (121) and/or the characteristics of the elastic means (141) are such as to allow the outflow of the incoming fluid (401) through the first outlet (801) for pressures of about 100 bar.

20. A vehicle washing system, or the like, **characterized in that** it comprises a fluid delivery device (1) as claimed in one or more of the preceding claims 1 to 19, and means for supplying water to such delivery device, which means include at least one delivery pump (2).

21. A system as claimed in claim 20, **characterized in that** means (3, 2) are provided for limiting water delivery flow and/or pressure.

22. A system as claimed in claim 21, **characterized in that** the water flow and/or pressure limiting means (3, 2) are set in such a manner as to reduce pressure and/or flow when supplying water with a detergent and/or a foaming agent in it.

23. A system as claimed in claim 21 or 22, **characterized in that** a piston pump, or the like, is provided as a delivery pump (2), and is used as a flow limiting device, thanks to means (3) for varying/limiting the operating speed thereof.

24. A system as claimed in claim 21 or 22, **characterized in that** the flow limiting means consist of a branch (10) for deviating a portion of the fluid supplied to the pump, a remote controllable valve being provided for closing and opening said branch (10) and/or varying the flow in said branch (10).

25. A system as claimed in claim 24, **characterized in that** said branch is a bypass branch that connects the delivery side and the suction side of the pump.

26. A system as claimed in one or more of the preceding claims 20 to 25, **characterized in that** it additionally comprises a pipe (305) for supplying a detergent agent, which is connected upstream or downstream from the delivery pump (2), a separate detergent supplying pump (5) or other similar means for actively supplying said agent being provided in the supply pipe (305).

27. A system as claimed in claim 26, **characterized in that** the detergent is supplied with the delivery pump (2) operating at reduced capacity, the detergent supplying means (5) being sized in such a manner that the detergent supplying pressure is higher than the water delivery pressure.

28. A system as claimed in any of the preceding claims 22 to 27, **characterized in that** it additionally comprises a pipe (206) for supplying a foaming agent, which is connected downstream from the delivery pump (2), a shut-off valve (6) and non-return valves (106, 7) being provided both in the foaming agent supplying pipe and between said pipe and the delivery pump.

29. A system as claimed in any of the preceding claims 22 to 28, **characterized in that** the foaming agent is supplied with the delivery pump (2) operating at reduced capacity, the foaming agent supplying means (5) being sized in such a manner that the foaming agent supplying pressure is higher than the water delivery pressure.

30. A system as claimed in any of the preceding claims 22 to 29, **characterized in that** the foaming agent is compressed air.

31. A system as claimed in claim 30, **characterized in that** compressed air is supplied at a pressure of about 3 to 8 bar.

32. A system as claimed in any of the preceding claims 20 to 31, **characterized in that** water with no foaming agent and/or detergent in it is delivered with the delivery pump (2) operating at full capacity to assure effective rinsing.

33. A system as claimed in claim 32, **characterized in that** full capacity operation corresponds to a delivery pressure of about 100 bar.

34. A system as claimed in any of the preceding claims 20 to 33, **characterized in that** the fluid delivery device (1) has such a size that the foaming agent and/or the detergent are delivered from the second outlet (171), whereas the rinse water is delivered from the first outlet (901).

35. A system as claimed in any of the preceding claims 20 to 34, **characterized in that** a bypass valve is further provided for limiting the maximum pressure in the water delivery pipe.

36. A system as claimed in claim 35, **characterized in that** means are further provided for disabling/enabling fluid supply to the delivery device.

37. A system as claimed in claim 36, **characterized in that**, when the delivery pump (2) operates at reduced capacity, the air supply means (6) are operated simultaneously, so that any pressure increase in the supply pipe (202), caused by disabling the supply to the delivery device (1) is discharged on the delivery device (1) in an attenuated manner once the supply is enabled again.
